**Europäisches Patentamt**

**European Patent Office**

**Office européen des brevets**

(19)

(11) Publication number: **0 038 655**
**A2**

(12) # EUROPEAN PATENT APPLICATION

(21) Application number: **81301582.3**

(22) Date of filing: **10.04.81**

(51) Int. Cl.³: **F 16 L 53/00**
**H 05 B 6/10**

(30) Priority: **11.04.80 GB 8012037**
**24.02.81 GB 8105749**

(43) Date of publication of application:
**28.10.81 Bulletin 81/43**

(84) Designated Contracting States:
**AT BE CH DE FR GB IT LI LU NL SE**

(71) Applicant: **PIPELINE INDUCTION HEAT LIMITED**
**306 White Horse Road**
**Croydon Surrey Cro 2LE(GB)**

(72) Inventor: **Bryant, Peter J.**
**20 Summershades Lane**
**Grasscroft Nr. Oldham Lancs(GB)**

(74) Representative: **Lawrence, Malcolm Graham et al,**
**BROOKES & MARTIN High Holborn House 52/54 High**
**Holborn**
**London WC1V 6SE(GB)**

(54) **Improvements in pipe induction heating.**

(57) Apparatus is disclosed for induction heating of metallic pipelines either in a weld area to effect a heat treatment or a pre-fusion coating temperature increase, at a pipe end or along the whole length of the pipe in order to effect drying. Apparatus for pre-coating temperature increase comprises a frame 10 whose essentially semi-circular cross-section members 11 and 12 are each made up of aluminium end plates 13, 14, 15 and 16. Aluminium box-section cross members secure the end plates together and mounted to the radially inner surfaces of these cross members are aluminium strip conductors 48 and 49 which in use clear the surface of a pipeline about which the apparatus is received. In operation, primary current passing through the ribbon-like conductors induces a secondary heat-generating current in the pipeline raising its temperature to as high as 750°C when using an electrical supply of 180 volts, 2500 amps and nominal frequency of 3500 hertz. The induction heater can be placed over the pipeline or removed from it by hinging apart of the two frame members 11 and 12 at a jaw of the apparatus.

./...

FIG.1.

-1-

## IMPROVEMENTS IN PIPE INDUCTION HEATING

This invention relates to heat treatment of
pipes and is particularly concerned with heat treatment of
pipes in the field or a contracting environment where access to suitable
main service supplies of electricity and gas is not readily available.

It is frequently necessary in the construction
of metal pipelines, for example, for conveying gas or
oil, to heat sections of the pipeline preparatory to
carrying out certain operations, for example, bending
the pipe, welding sections together or to coating the pipe
with a protective layer. Propane gas flames have been
used but suffer from the disadvantage that it is
difficult to control the heating pattern in the field
because of the effect of wind and ambient temperature. Electrical resistance techniques are also used but suffer from being
comparatively slow and also cumbersome to install and remove.
More recently, interest has developed in the use of
electrical induction heating for heating selected sections
of pipelines but while this has proved to constitute an
improvement over propane heating processes, other
difficulties have arisen. One conventional induction
heating coil capable of heating a pipeline to a temperature of the order of 250°C consists of a coil made up by
winding a heavy, circular section copper cable onto a
former.  In order to encircle the pipe with such a coil
it is necessary to provide some means for opening the
coil out and reconnecting the ends of the conductors once
the sections of the coil have been arranged around the
pipeline.  This inevitably involves complicated hinge and
connector structures and substantial power losses occur
at the connectors, where the ends of the cables are joined,
which results in arcing between the contact surfaces. The
power efficiency of such coils is low and while, theoret-
ically, their efficiency could be improved by increasing
the frequency of the electrical current supply, this
would involve a total voltage drop across the ends of the
coil which would be too high to be acceptable on grounds
of safety.  Furthermore, presently available coils
produce a rather unsatisfactory heating pattern in the
pipeline inasmuch as the pipeline is heated to a relatively
high temperature over a short longitudinal distance and the
temperature of the pipe on each side of the heated sections
falls off rapidly with a distance from the heated central
section.  This is a disadvantage in many operations where
a more consistent heating over a bnger section is
required.

It has now been discovered that many of the
above problems can be overcome by a different approach
to the induction heating of pipelines and similar metal
structures.  According to one aspect of the present invention
there is provided an electrical induction heater adapted for heating a pipe which comprises at least one ribbon-like conductor which is dimensioned so as to substantially encircle the pipe and means for connecting the ends of the conductor to a medium or high-frequency power source.

By the term "ribbon-like conductor" we mean a conductor having a dimension in the direction of the longitudinal extent of the pipe which is greater than its thickness. Normally conductors with which the present invention is concerned have a width to thickness ratio of at least 10 and preferably at least 20. Since the induction effect results from electrical field changes at the surface of the conductor, the provision of a conductor in ribbon-like form is comparatively more efficient than a wound coil in inducing currents in a metal pipe encircled by the induction heater. In one preferred form of the invention the electrical induction heater comprises a plurality of ribbon like conductors connected in parallel and encircling the pipe and extending side-by-side longitudinally of the pipe. In one form of the invention, the plural conductors may be formed from a single strip of conductor material by forming slots in the material which extend in a direction circumferentially of the pipe. The widths of such slots can be varied to provide predetermined heating characteristics to the pipeline depending on the width of conductor between adjacent slots.

Alternatively, separate adjacent conductors may be provided which may be connected to sources of oscillating electrical current having different frequencies so that the heating pattern of the underline pipe can be varied at will.

The ribbon-like conductors need not completely circle the pipe and fitting the heater around a pipe does not require connections between the end of the conductors, as is essential in previously designed induction heaters for this purpose. The induction heaters of this invention may be designed so as to be flexible, ie. by manufacturing the conductor from a material which is flexible enough to be opened out and wrapped around the pipe or they may be fitted in a frame and provided with a hinge or connection for fitting to or removal from a pipeline.

In another embodiment of the invention, the heaters may be formed in two roughly semi-circular sections and fitted to the pipeline from each side, one end of each of the semi-circular halves being earthed to the pipeline while the other ends are connected to the high-frequency generating source. The invention is not limited to the application of a single turn coil consisting of a number of ribbon-like strips connected together and to the supply at their ends. In some circumstances it is preferable to have two such turns connected electrically in series. Each of these turns may consist of strips connected together at their ends, but the strips in the two coils are not necessarily alike. One simple connector joining the two turns in series will be all that is required to complete the electrical circuit when the turns have been fitted around the pipe. The two turns may be held together in a single structure, or they may be fitted separately to the pipe.

There are several advantages in using separate ribbon-like conductors to comprise a coil. They can be mounted accurately and close to the pipe and they may be suitably spaced from each other to ensure desirable control of heating rates in different parts of the pipe, for example which would be needed when heating bends in the pipe. Furthermore, the conductors could be spaced apart in places to facillitate visual inspection of the pipe surface during heating.

The induction heaters of the present invention may be used for a variety of purposes, for example, for pre-heating a pipe prior to welding or prior to bending, for annealing of pipeline, post-heating of surface coatings in order to effect a chemical cure of the coatings, and heat shrinkage of sleeves fitted externally to pipelines. It is possible by virtue of the present invention to heat the pipe externally and internally and a wide range of heating temperatures can be achieved. Thus, it is possible to raise the temperature of sections of pipelines from temperatures as low as $-50^{\circ}C$ (which prevail for example in Alaska) to temperatures as high as $1000^{\circ}C$. The amount of heat generated by the heater can be controlled by the electrical supply. Typical frequencies are in the range of 1000 - 5000 hertz and a single phase, 110 volts supply providing a power supp-y of 50 - 150 kva is satisfactory for may purposes.

The invention provides in its broadest sense induction heating apparatus for use in heating a metallic pipe length in a circumferential or part-circumferential band characterized in that a ribbon-like conductor is carried by means receivable in contact with the pipe so as in use to dispose the conductor in such juxtaposed spaced relationship with the pipe surface in said band that primary current passing through said conductor in use induces a heat-generating secondary current in the pipe.

The conductor may be so dimensioned and configured as in use to be juxtaposed with respect to substantially all of the circumferential extent of a circumferential surface band of the pipe.

Preferably, the conductor is such as in use to define substantially the circumference of a circular plane which, with the apparatus in use received about a circular cross-sectioned pipe length, intersects diametrically the cross-section of said pipe.

In apparatus for high temperature heat treatment of pipe, for example when heating to a temperature of $500^{\circ}$C to $800^{\circ}$C. (eg. up to about $750^{\circ}$C., for example approximately $600^{\circ}$C or more), the apparatus will often include fewer conductor ribbons than in an apparatus for medium temperature pre-heating (eg. $200^{\circ}$ to $300^{\circ}$C., for example, approximately $250^{\circ}$C.) or low temperature pre-heating (eg. in the region of $100^{\circ}$C.). In addition, in high temperature apparatus, the conductors will normally be cooled and in general they will be made of thicker material (eg. thicker copper or aluminium strip, which is the preferred material for all three types of apparatus according to the invention).

Accordingly, high temperature apparatus will usually comprise a conductor and a carrier for carrying said conductor in such disposition that in use the conductor is arranged in inductive proximity with respect to the pipe surface, characterized in that the apparatus includes means for dissipating heat from the conductor in use.

The conductor may be a metallic member secured in heat-dissipating relationship to means defining a fluid coolant flow path. For example, the conductor may be a metallic member secured in heat conductive contact to a metallic pipe for carrying a coolant flow in use.

The conductor may be a metallic pipe whose bore in use carries a fluid coolant madium in flow.

In general, a plurality of conductors will be present, for example from 2 to 4 conductors.

In medium (and low) temperature heat treatment apparatus in particular, the conductors when plural in number will include at least one conductor whose dimension in the longitudinal direction of the pipe length differs from that of the other or at least one other of said conductors. In particular, the apparatus may include a first group of said conductors each defining the circumferential extremeties of separate, spaced essentially circular parallel planes and a second group of conductors substantially identical in form and relationship with the first group with the two groups being spaced one from another by a spacing greater than that between the respective conductors of each group. In a preferred apparatus each group consists of a pair of conductors, the conductor of each group closest the other group of conductors having a dimension in the longitudinal direction of the pipe length greater than the corresponding dimension of its paired conductor.

Although conveniently defining the circumference of a generally circular plane, the or each conductor may desirably be in helical form and in apparatus so formed one helical conductor will in most cases be sufficient and perform the functions of an apparatus having two or more annular loops as separate conductors. Of course, in a helical conductor apparatus, the number of turns of the helix will be of importance and selected accordingly.

The means carrying the conductor in both low, high and medium temperature apparatus will normally be a frame, for example a frame comprising two frame members spaced apart axially and connected together by support members to which the conductor is mounted. In a particular embodiment, the frame comprises a first portion defining with a second frame portion a pipe-receiving opening in the frame, the two frame portions being connected together hingedly so as in use to be moveable apart at a jaw of the frame to enable disposition of the frame about a pipe length

0038655

with the pipe length received in the frame opening. In
such apparatus, conveniently, the conductor is provided
with electrical continuity by means of a flexible electrical
connection means at the hinged connection of the two frame
portions and by means of a tongue-and-socket assembly
at the jaw.

The ribbon-like conductor(s), in the medium
and low temperature apparatus in particular, will generally
have a thickness equal to not more than half the width thereof.
The thickness may be ½" (12.7mm) or less; the width
regardless of thickness may be from 1" to 3" (25.4mm to
76.2mm).

In high temperature apparatus, the conductor
may be a metallic member secured in heat dissipating relationship to means defining a fluid coolant flow path; for example,
a metallic pipe for carrying a coolant flow may be secured
(eg. by brazing) in heat conductive contact to the metallic
member.

It is to be understood that the invention relates also to an apparatus and method for heating a pipe end, for example as a preheating step prior to welding together of two pipes at their ends.

Such heating is currently effected by application to the pipe surface at the pipe end of a gas flame or by disposing resistance pads on the pipe surface in spaced relationship about the pipe circumference.

According to the invention, a pipe end heating apparatus comprises an induction heat element in the form of one or more electrically-conductive members so sized and configured as to be receivable in juxtaposed spaced relationship with the pipe surface at an open end thereof, the element preferably having means engagable with the pipe to enable retention of the element in the aforesaid relationship of the conductive member(s) with respect to the pipe.

In a particular embodiment, the apparatus comprises at least one metallic conductor formed into a part circular member receivable over or within an end of a pipe of predetermined diameter so as to be spaced from its external or internal circumferential surface in juxtaposed relationship therewith over substantially all said surface. Preferably, the apparatus will include one or more such conductors for receipt within and one or more such conductors for receipt over the pipe at its end.

-11-

0038655

The induction heating element may conveniently be secured to the pipe end by means of one or more members (eg. three members or more) engageable with the pipe, for example members each provided with a slot for reception of a portion of pipe wall. The members will, in the case of three member securement, normally be provided in radially equally spaced relationship. The securement members may serve the additional purpose of maintaining the spacing between electrically conductive members when a first such conductive member is provided for reception within the pipe end and a second is provided for reception over the pipe end.

The electrically conductive members may conveniently be cooled during use, means being provided as part of the apparatus for achieving such cooling. For example, the electrically conductive members may take the form of a metallic pipe with flow and return connections being provided for connection of a source of coolant such as water. Alternatively, the conductive members may be of another form with coolant pipe provided in heat conductive contact therewith (eg. a strip of copper conductor having copper tubing brazed thereto).

The invention includes within its scope a method of heating a pipe end which method comprises disposing an electrical conductor at the pipe end in juxtaposed spaced relationship with the pipe surface and passing electric current therethrough so as to effect induction heating of the pipe surface.

The following is a specific description, by way of example only, of particular embodiments of the invention, reference being made to the accompanying drawings in which:-

Figure 1 is an isometric view of a first embodiment of the invention, intended for high temperature heat treatment of a pipeline prior to or during a multi-stage pipe welding operation in which two pipeline lengths are joined axially;

Figure 2 is an anterior view of the apparatus shown in Figure 1 showing the apparatus in closed jaw condition such as it would be when received over a pipeline for use;

Figure 3 is an anterior view of the apparatus shown in Figure 1 showing the apparatus in open jaw condition such as it would be when ready for placement over or removal from a pipeline;

Figure 4 is a view of the region X of Figure 1 showing in cross-section the contact assembly used in the apparatus for electrical connections at the jaw;

Figure 5 is a view of the region Y of Figure 1 showing a different conductor as would be used in apparatus for medium temperature treatment of a pipeline, for example prior to fusion coating with epoxy

Figure 6 is a cross sectional view of a second embodiment of the invention suitable for use in pipe end heating;

Figure 7 is an end view of the apparatus shown in Figure 6 in the direction of the arrow A in Figure 6;

Figure 8 is a cross-section of the apparatus shown in Figures 6 and 7 taken along the line VIII -VIII of Figure 6.

Figure 9 is an end-on view of a pipe end with a further embodiment of the invention in place to serve as an end heater;

Figure 10 is a view of Figure 9 in the direction of the arrow A in Figure 9;

Figure 11 is a set of temperature-pipe axis curves showing heated pipeline surface temperature characteristics as typically achieved by conventional means and as typically achieved using apparatus as diagrammatically represented in Figure 12; and

Figure 12 represents diagrammatically a medium temperature heat treatment apparatus of the invention.

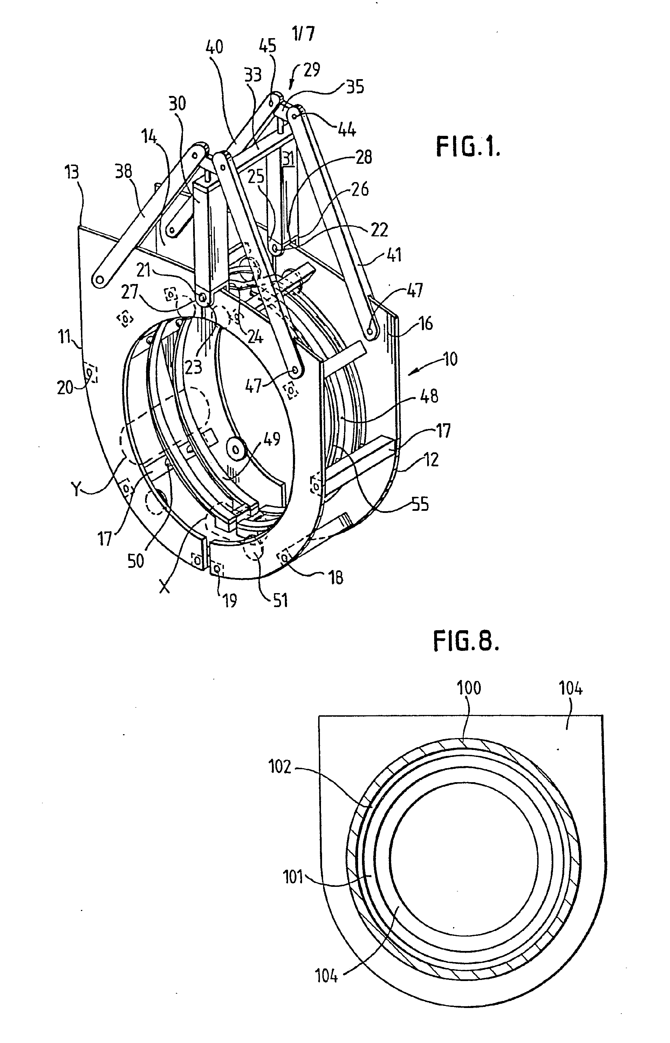

The apparatus shown in Figures 1 to 3 comprises a frame shown generally at 10. The frame 10 comprises two frame members 11 and 12 each of essentially semi-circular cross-section. Each of frame members 11 and 12 comprises a

0038655

pair of end plates 13, 14 and 15, 16 made of ½"(12.7mm) gauge aluminium sheet. The end plates 13, 14, and 15, 16 of each pair are connected together by means of cross-members 17 disposed parallel to the axis of the pipeline in use.

The cross-members 17 are each of hollow rectangular cross-section and made of aluminium. The cross members 17 have in each of their axial ends a polycarbonate block 18 secured by means (not shown) located in the cavity of the cross-member. A protruding portion 19 of each polycarbonate block extends axially from the end of each cross-member so as to abut one of end plates 13, 14, 15, 16. Bolts 20 passing through apertures (not shown) in the end plates are received in bores provided in polycarbonate blocks 18 so as firmly to engage the cross-members in the position shown in the drawings but at the same time ensure the presence of no electrical connection between the cross-members and the end plates.

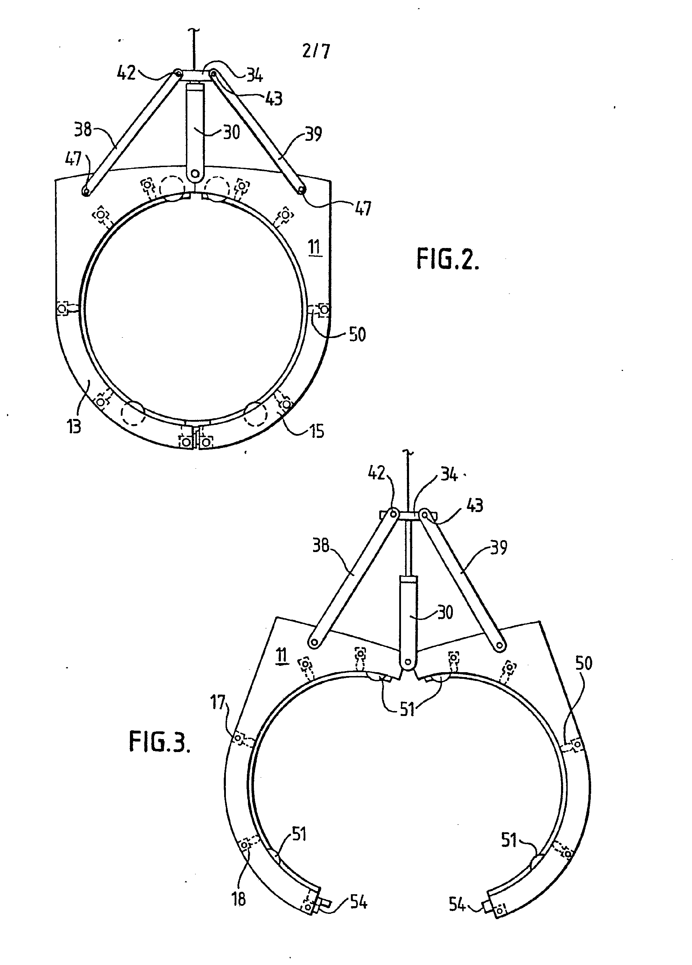

Frame members 11 and 12 are connected together at their upper portions by means of hinge pins 21 and 22 which are received through aligned apertures (not shown) both in end plates 13, 14 and 15, 16. Hinge pins 21 and 22 are also received, respectively, in apertures (not shown) formed in flanges 23, 24 and 25, 26 of mounting members 27 and 28 of a support and opening-closing assembly shown generally at 29. In use, the apparatus is suspended from assembly 29 by means of a hoist cable shown in Figures 2 and 3.

The assembly 29 includes a pair of piston-and-cylinder assemblies 30 and 31 which carry the mounting members 27 and 28, respectively, at their bases. The piston-and-cylinder assemblies 31, 32 are connected together by a common
transom plate 33. Connecting rods 34 and 35 connect the
piston of each assembly, respectively, to each of two pairs
of lever arms 38, 39 and 40, 41. The lever arms just
mentioned pivot to the connecting rods 34and 35 at pivot pins
42, 43, 44 and 45. A slot 46 at the opposed ends of each
pivot arm receives a portion of one of end plates 13, 14,
15 and 16, each pivot arm being pivoted to its respective
end plate by a pivot pin 47.

Conductor ribbins 48 and 49 are mounted in
the apparatus by securement to the radially inner surface
of each cross-members 17. The means of securement is
shown diagrammatically at 50 in Figure 1 and usually
comprises in each case a pair of stand-off members of electrically insulating heat-resistant material. The securement
members are usually secured in place between the cross-
members 17 and conductor ribbons 48, 49 by means of bores
in the stand-off members receiving spigots secured in the
cross-members 17 and the conductor ribbons.

Conductor ribbons 48 and 49 are each formed
into an annulus of diameter such as to be receivable over the
pipe surface of a pipeline with a clearance of approximately
½" (12.7mm). Eight spacer wheels 5 having
suitable end plate mountings (not shown) are provided for
pipeline surface engagement in use, to maintain optimum
clearance. Typically the apparatus shown in Figures 1 to 3 may
be used in connection with a pipeline of external diameter 30"
(762mm) so that the internal diameter of the annulus defined
by each of conductor ribbons 48 and 49 will in such a case be approximately 31" (787mm). The pipeline, however, may conveniently be of different outside diameter, a 42" (approx 1067mm) outside diameter pipeline being commonly encountered in practice in the oil and gas industries.

Conductors ribbons 48 and 49 are each made of copper and have a dimension in the axial direction of the pipeline of approximately 1" (25.3mm) and a dimension in the radial direction of the pipe of approximately ¼" (6.35mm) in the apparatus shown in Figures 1 to 3. They are spaced apart with a distance of ½" (12.7mm) between their opposing edges and together occupy a central region between the end plates 13, 14, 15, 16.

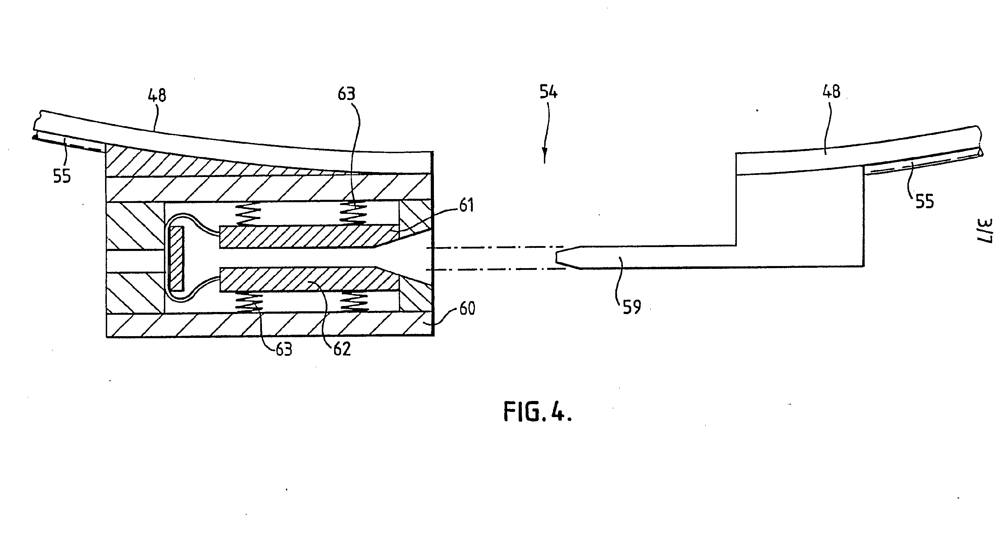

In order to facilitate movement at the jaw at the point of hinged connection or the two frame members 11 and 12, the conductor ribbons 48 and 49 each comprise two separate parts each defining essentially a half annulus. At the jaw of the apparatus the half annuli are connected together by a contact assembly 54 shown in detail in Figure 4 of the drawings. At the hinge of the apparatus electrical continuity is ensured by conductive means forming part of the coolant system of the apparatus which will be described below.

The coolant system of the apparatus comprises copper tubing 55 seam brazed to the radially outer surface of each of conductor ribbons 48 and 49 and connected in use to a pumped supply of coolant water (not shown). Flexible rubber hoses provide that the coolant in the system of one ribbon flows in parallel to that in the other. The copper tubing 55 is of internal diameter ½" (12.7mm) and is of the standard imperial dimensions type available commercially in the United Kingdom. Standard metric sized copper tubing may be used alternatively with no difficulty, typically as 15mm outside diameter tubing.

Rubber bridge pieces (not shown) are provided at the hinge of the apparatus to provide continuity of the water circuit as between a half annulus of one conductor ribbon and a half annulus of the other without communication across the jaw.

The apparatus in use is connected to flexible electrical supply leads which can be connected at mechanically secure connections (not shown) on the conductor ribbons 48 and 49. The conductor ribbons are connected electrically in series, connection between the two conductor ribbons at the hinge of the apparatus being effected by means of one of flexible rubber hoses (not shown) connected between the coolant sub-system of conductor ribbon 48 and the coolant sub-system of conductor ribbon 49, the flexible rubber hose including an electrically conductice metallic braid which provides the necessary electrical continuity.

The contact assembly 54 comprises a tongue 59 made of copper and brazed to one extremity of one half annulus of each conductor ribbon. The tongue 59 is receivable in contact socket 60 also made of copper and including a pair of parallel opposed copper contact plates 61 and 62 mounted within the socket housing 60 and spring-loaded by means of a plurality of springs 63. The socket assembly is likewise brazed to an opposed extremity of each of the remaining half annuli of the conductor ribbons 48 and 49.

In operation, the apparatus shown in Figures 1 to 3 is fixed by means of the hoist cable and hoisted to a position above a pipeline. By operation of the assembly 29 by control of a pneumatic or hydraulic supply (not shown), the jaw of the apparatus can be opened and the apparatus lowered over a previously welded joint between two sections of a length of the pipeline. The jaw is then closed and electrical and coolant supply commence; current passing through the conductor ribbons 48 and 49 induces a current in the pipeline around the weld area raising its temperature. The pipeline sections will normally be received on roller, for example provided on the deck of a ship or other floating platform in the case of marine pipeline, and when the weld area has been sufficiently raised in temperature the pipeline can be moved on the rollers so that the weld area is spaced from the induction heating apparatus. Alternatively, the induction heating apparatus itself can be moved. Further girth welding of the pipeline can then be carried out as desired. As will be appreciated by those skilled in the art, a heat treatment applied by means of an induction heating apparatus is desirable in the interests of the structure of the metal in the weld area during a welding operation.

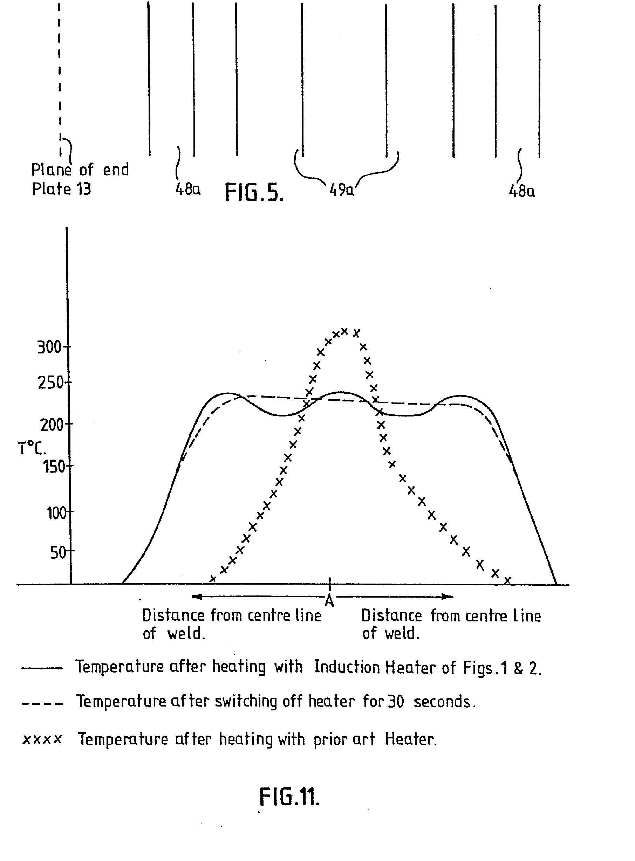

The medium temperature heat treatment apparatus for which a conductor assembly is shown in Figure 5 of the drawings can be identical in other respects to the apparatus described with reference to Figures 1 to 4 of the drawings. In general, the axial diemnsions of the conductor ribbons will be larger than in the case of the high temperature induction heating apparatus shown in Figures 1 to 4 and the radial dimensions will be smaller and in general the number of conductor ribbons will be greater in number; in the conductor arrangement shown in Figure 5, conductor ribbons 48a and conductor ribbons 49a are dimensioned and spaced as follows:-

|  | Width | Spacing between nearest Extremeties |
|---|---|---|
| 48a | 1.5" (38.1mm) | – |
| 49a | 1" (25.4mm) | – |
| 48a - 49a | – | 0.875" (22.23mm) |
| 49a - 49a | – | 3.25 " (82.55mm) |
| Frame end plate - 48a | – | 2.5 " (63.5mm) |

In both the high temperature and the medium temperature treatment apparatus, the source of electrical power will be a medium/high frequency electrical generator/frequency changer, for example a generator having a nominal output supply frequency of 1,000 to 10,000 hertz, the supply current and voltage for the two types of coil being typically as follows:-

Voltage    :-   75 - 300 volts

Current    :-   1,000 - 10,000 amps

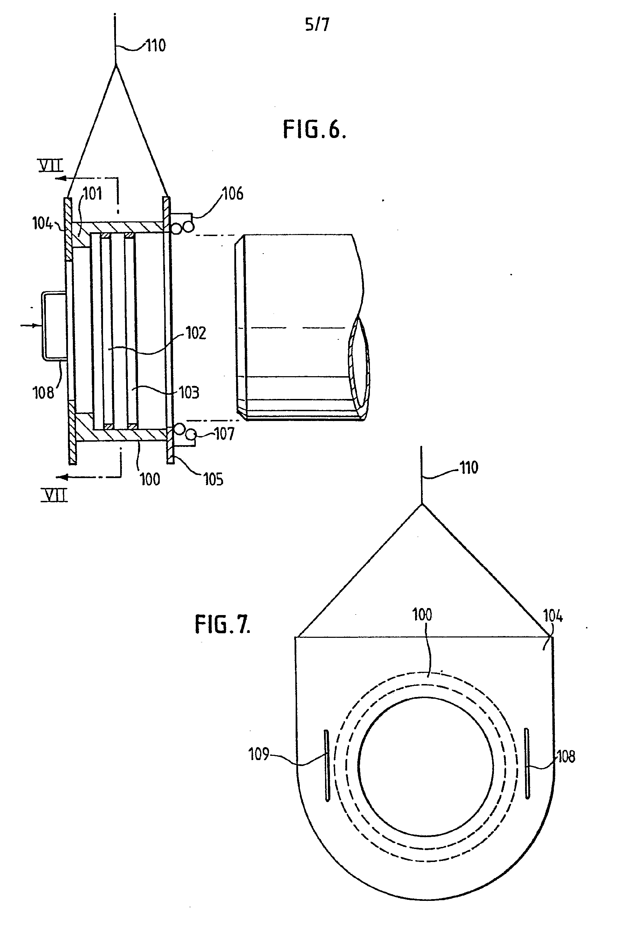

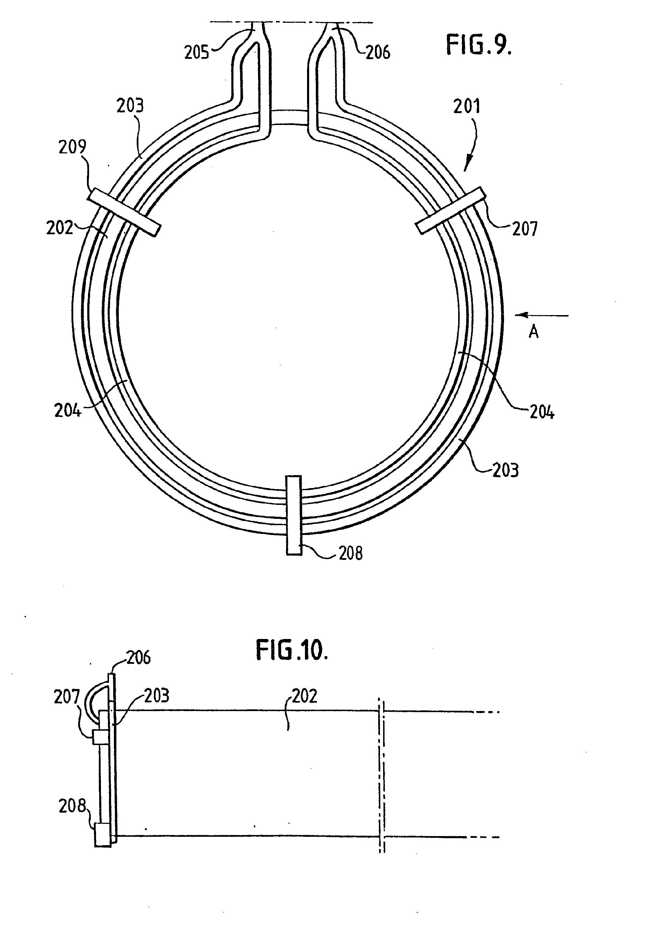

The apparatus shown in Figures 6 to 8 of
the drawings is intended for location on the end of a
length of pipeline in order to effect induction pre-heating.
The apparatus as shown comprise a plurality (eg eight) of
axial insulating cross members 100 disposed in essentially
equi-spaced relation around the circumference of a
cylindrical cavity.  The members 100 may be made of a
tufnol-type material. Their position in Figures 7 and 8 is
shown by a cylindrical band in the interests of simplicity.
A shoulder 101 is defined at one axial extremity of each
member 100 and serves as a pipe end positioner.

Two or three copper conductors (two shown as
102 and 103) are mounted to the cross members 100 by means
of insulator clamps (not shown). These conductors are typically
copper strips (as shown) which are air cooled or copper tube
in which water passes through for water cooling.

End plates 104 and 105 are secured by bolts
not shown to the axial extremities of members 100. Each
end plate 104, 105 defines a circular aperture communicating
with the cavity defined within members 100, the aperture
defined in end plate 104 being substantially smaller than
the diameter of the pipe and the aperture in end plate
105 being slightly larger than the outside diameter of the
pipe.  Guide roller assemblies (two only shown - 106 and 107)
are provided at circumferentially spaced dispositions
adjacent the aperture in end plate 105.  Each guide
roller assembly 106, 107 comprises a mount member
secured to the end plate 105 on its outer face and a pair of guide rollers mounted to said member and rotatable upon contact with a pipe end approximately aligned with the cavity in cylinder 100 for receipt of the apparatus over the pipe end.

A pair of handles 108 and 109 are provided on the outer face of end plate 104 to enable the apparatus to be located on and de-located from a pipe end manually.

Hoist cable 110 is provided to suspend the apparatus for use.

In Figure 9, the apparatus is shown generally at 201 secured to the open end of a steel pipe 202. The apparatus comprises a pair of conductors 203 and 204 each in the form of a hollow copper tube of the standard 15mm diameter commercially widely available.

Conductors 203 and 204 share common flow and return connections 205 and 206, respectively, and have common electrical connections (not shown) for connections to an electrical output supply of high frequency (eg. 1000Hz to 5000Hz).

Retainers 207, 208 and 209 are provided at intervals of $120^0$ about the pipe and each of conductors 203 and 204 is mounted to each of the retainers, acting as spacers maintaining the spacing between conductor rings 203 and 204. Each retainer has a slot (not shown) extending parallel to the apparatus axis and receives in its slot an end wall portion of pipe 202 whereby the apparatus is located to the pipe end with the conductors disposed 5 or 6mm from the pipe surface, as best shown in Figure 10.

In operation, a pumped coolant water supply is connected to the flow and return connections 205 and 206 and electrical current connected to the electrical connections of the conductors. Current is thereby induced into the material of the pipe 202 causing its temperature to increase to a desired level. Proper control of the frequency and current rating of the power supply ensures correct temperature elevation and rise time.

Current characteristics may be as described earlier for the apparatus shown in Figure 1.

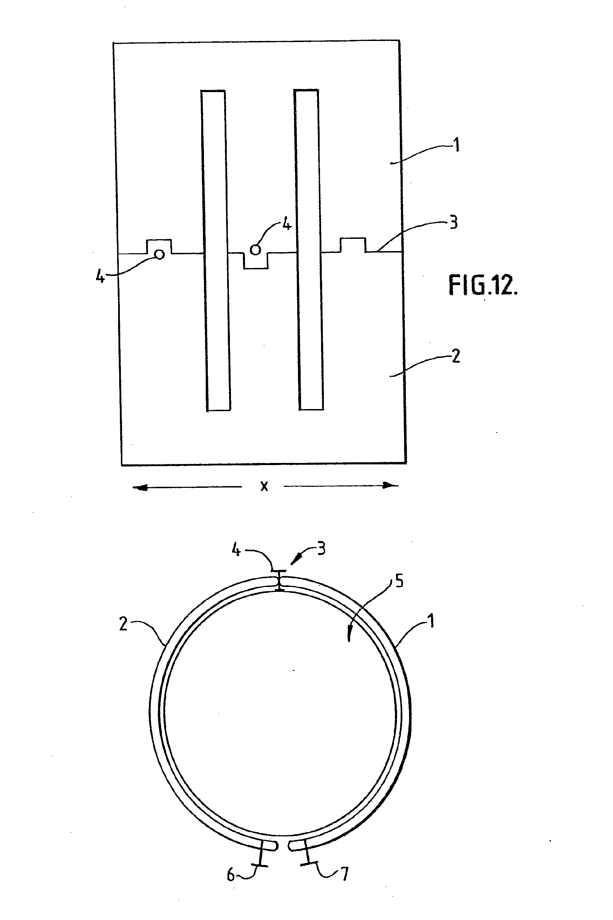

Referring to the diagrammatic representation of Figure 12, the induction heater comprises two sections of aluminium or copper strip 1 and 2 which are shaped to form two semi-cylindrical parts having a dimension X of about 14" and a thickness of about 1/8". The two sections 1 and 2 are connected together by connector means 3 and are provided with clamps 4 for earthing to the pipe 5. The ends of the sections 1 and 2 remote from connector 3 are in electrical contact with a high frequency generator supplying current at 110 volts single phase a.c. at about 2000 hertz frequency. Connectors 6 and 7 are connected respectively to the positive and negative terminals of the high-frequency supply. The conductors 1 and 2 are provided with insulating means between the pipe and the surface of the conductor and the power supply may be provided by a portable generator providing a standard 3 phase supply connected to an inverter for conversion to single phase.

The pipe is rapidly heated in use and the heating pattern achieved is indicated in Figure 11 in which the full line of the graph represents the temperature of the pipe in the region of the weld. The graph is produced by plotting the temperature against distance from the centre-line of the weld, represented by point A in the graph. The broken line represents the temperature of the pipe in the region of the weld 30 seconds after the induction heater has been removed. The graph represented by a series of crosses indicates the heating patter achieved using a conventional coil induction heater. It will be seen from the graph that when using the induction heater of the present invention a relatively long section of the pipe is heated to a consistent temperature and after 30 seconds the plateau indicated by the graph is even flatter. In contrast, the prior art heater produces a very steep, sharp curve indicating that the pipe is heated very locally to a high temperature and the temperature drops away steeply on each side of the weld line. This is undesirable in many heating processes carried out on pipeline construction and renovation and essentially means that it is necessary to heat the pipe to a much higher temperature in one local area in order to raise the temperature sufficiently in other areas to carry out the desired treatment.

Using an induction heater as shown in Figure 12, and described above, a 42" pipeline shot blasted to clean all traces of corrosion and grease from the area of weld lines could be heated to a temperature of 245$^{o}$C. The induction heater is in use swiftly moved to a separate location by moving it along the pipeline and within 30 seconds a heat curable one part epoxy resin can be sprayed onto the heated section. The resin fused in contact with the hot pipe and cured to form a continuous protective layer.

The following specific worked Examples are intended further to illustrate the invention.

Example 1

The apparatus shown in Figures 1 to 4 was hoisted over a pipeline roller line on the deck of a marine pipeline laying vessel. The jaws of the apparatus were opened, the apparatus lowered over a pipe as next described and the jaws closed.

Two separate lengths of 30" internal diameter pipeline were previously placed on the roller line in abutting relationship. The pipe had a wall thickness of 1" (25.4mm). The abutting edges of each length of pipeline had previously been chamferred so that the abutting pipe edges define a groove.

A first girth seam weld was formed at the base of the groove by conventional pipeline welding methods. A second overlying weld was then applied by similar methods. The pipeline was then moved along the roller line with the induction apparatus remaining stationary and the pipeline passing through it. Movement of the pipeline was ceased when the weld area referred to above was received beneath the conductor ribbons on the induction heating apparatus. Electrical and coolant supply were then commenced. The electrical supply was a high frequency supply of nominal frequency 3500 hertz. The voltage of the supply was 180 volts and the current was 2500 amps. Over an initial one minute rise time, the temperature of the pipe in the weld area was raised to 600°C. The induction heater was left in operation for a further three minutes to hold the temperature at approximately this level. The pipeline was then moved on the roller line until the weld area just heat treated reached a further welding station. Two further welds were then provided in the groove at the abuttment of the two pipe length ends to complete the girth weld.

Example 2

A steel pipe having a 42" (1067mm) external diameter and a ¾" (19mm) wall thickness was welded to a length of similar pipe. Both pipes had been provided with an epoxy resin coat during factory manufacture, with the epoxy resin coating covering the entire length of the pipe except for a band approximately 4" (approx 100mm) at each end. After welding, the medium temperature induction heater as described above with reference to Figure 5 of the drawings was placed around the weld area and current supply commenced.

The current supply was of approximately 100 volts and approximately 2000 amps with a nominal frequency of approximately 2500 hertz. During a rise time of three minutes the temperature of the steel pipe in a band about 9" (229 mm) wide about the weld centre was heated from approximately 0°C to 250°C. The heater was then moved along the pipe to the next weld.

During the rise time, close temperature control was exercised by means of a pyrometer mounted to one of the cross members 17 of the heater. The pyrometer was placed to sense any temperature variation across the area of heating, the signal feed from the pyrometer being fed into a computer control connected to the electrical supply so as to enable variations in supply characteristics to ensure optimally uniform heating over the 9" heating band referred to earlier.

The curves in Figure 10 of the accompanying drawings show the uniformity of heating temperature over the band of pipe heated in comparison with the surface temperature characteristics in the heated band obtained using a conventional prior art induction heater.

After removal of the heater from the band heated, an epoxy resin powder applicator was placed over the heated surface and epoxy powder applied to the surface to provide a resin fusion coating to complete the protective coating partially provided during factory manufacture of the pipeline lengths.

Example 3

The induction heater referred to in Example 2 was placed over a length of wet steel pipeline as described in Example 2. A current supply of approximately 75 volts and 1500 amps with a nominal frequency of 3500 hertz was fed to the apparatus. Commencing at one axial extremity of the pipe the heater was moved along the length of the pipe to the other end at such speed that the surface temperature of the pipe along its entire length was increased to approximately 100$^{O}$C for at least the period during which time secondary current is induced in the pipe. After the heater had been run along the length of pipe, the pipe was found to be perfectly dry.

The invention described with reference to the drawings and referred to in the above specific Examples may be modified in any number of ways which will be readily apparent to those skilled in the induction heating and pipeline laying fields. Higher frequency supplies can, for example, be fed to the various apparatus and whether or not this requires modifications to the conductors will either be readily apparent to the skilled man or easily determinable by simple experiment. With respect to construction, it may often be more convenient to construct the apparatus shown in Figures 1 to 4 with double skinned end plates, each skin being formed from $\frac{1}{4}$" aluminium plate and being fixed to $\frac{1}{4}$" aluminium spacer members provided between the skins.

CLAIMS

1.         An induction heating apparatus for use in heating a metallic pipe length in a circumferential or part-circumferential band which apparatus comprises a ribbon-like conductor and means carrying said conductor and receivable in contact with the pipe so as in use to dispose the conductor in such juxtaposed spaced relationship with the pipe surface in said band that primary current passing through said conductor in use induces a heat-generating secondary current in the pipe.

2.         An apparatus as claimed in Claim 1 wherein the conductor is so dimensioned and configured as in use to be juxtaposed with respect to substantially all of the circumferential extent of a circumferential surface band of the pipe.

3.         An apparatus as claimed in Claim 1 or Claim 2 wherein said conductor is such as in use to define substantially the circumference of a circular plane which, with the apparatus in use received about a circular cross-sectioned pipe length, intersects diametrically the cross- section of said pipe.

4.         An apparatus as claimed in Claim 2 or Claim 3 which includes a plurality of said conductors.

Claim(s) Nr 4 deemed to be abandoned

5.         An apparatus as claimed in Claim 4 wherein the conductors number from two to four.

Claim(s) Nr 5 deemed to be abandoned

6.      An apparatus as claimed in Claim 4 or Claim 5 wherein said conductors include at least one conductor whose dimension in the longitudinal direction of the pipe length differs from that of the other or at least one other of said conductors.

7.      An apparatus as claimed in any one of Claims 4 to 6 and including a first group of said conductors each defining the circumferential extremeties of separate, spaced essentially circular parallel planes and a second group of conductors substantially identical in form and relationship with the first group with the two groups being spaced one from another by a spacing greater than that between the respective conductors of each group.

8.      An apparatus as claimed in Claim 7 wherein each group consists of a pair of conductors, the conductor of each group closest the other group of conductors having a dimension in the longitudinal direction of the pipe length smaller than the corresponding dimension of its paired conductor.

9.      An apparatus as claimed in Claim 1 or Claim 2 wherein the conductor is of helical form.

Claim(s) Nr 9 deemed to be abandoned

10.      An apparatus as claimed in any preceding claim wherein the means carrying said conductor comprises a frame.

Claim(s) Nr 10 deemed to be abandoned

11.      An apparatus as claimed in Claim 10 wherein the frame comprises two frame members spaced apart axially

Claim(s) Nr 11 deemed to be abandoned

and connected together by support members to which the conductor is mounted.

12.      An apparatus as claimed in Claim 10 or Claim 11 wherein the frame comprises a first portion defining with a second frame portion a pipe-receiving opening in the frame, the two frame portions being connected together hingedly so as in use to be movable apart at a jaw of the frame to enable disposition of the frame about a pipe length with the pipe length received in the frame opening.

13.      An apparatus as claimed in Claim 12 wherein the conductor is provided with electrical continuity by means of a flexibly electrical connection means at the hinged connection of the two frame portions and by means if a tongue-and socket assembly at the jaw.

14.      An apparatus as claimed in Claim 13 wherein the tongue-and-socket assembly is substantially as hereinbefore described with reference to and as illustrated in Figure 4 of the accompanying drawings.

15.      An apparatus as claimed in any preceding claim and including a conductor made of copper strip material.

16.      An apparatus as claimed in any preceding claim and including a conductor in the form of a strip which has a thickness equal to not more than half the width thereof.

17.      An apparatus as claimed in Claim 15 or Claim

16 wherein the strip has a thickness not exceeding ½".

18.        An apparatus as claimed in any preceding
claim wherein the strip is from 1" to 3" in width.

19.        An induction heating apparatus for use in
heating a metallic pipe length of generally circular
cross-section in a circumferential band which apparatus
comprises a frame having two frame members together defining
a pipe-receiving opening and hinged together so as to define
a jaw which is openable by pivotable movement at the hinge
to admit the pipe to said opening, and a plurality of strip-
form electrical conductors carried by the frame so as to be in
inductive proximity to the pipe surface in use of the apparatus,
said conductors in the closed position of the jaw each defining
the circumference of a generally circular plane which
intersects diametrically the cross-section of a pipe length
received by said frame in use and said conductors being
spaced apart along the pipe axis with electrical connection
means being provided at the jaw.

20.        An induction heating apparatus for use in
heating a metallic pipe length in a circumferential or part-
circumferential band, substantially as hereinbefore described
with reference to, and as illustrated in, the accompanying
drawings.

21.        A method of drying a damp or wet metallic

0038655

pipe surface which method comprises disposing in inductive proximity to said surface one or more ribbon-like conductors so arranged as to define an opening for the pipe and conducting a high frequency current through said

conductor.

22.      A method as claimed in Claim 21 wherein the

pipe surface is raised in temperature to approximately

100°C. by conducting through said conductor an electrical

current of approximately 1500 amps at a potential difference

of approximately 75 volts.

23.      A method for pre-heating a metallic pipe surface prior to fusion coating which method comprises disposing in inductive proximity to said surface one or more ribbon-like conductors so arranged as to define an opening for the pipe and conducting a high frequency current through said conductor.

24.      An induction heating apparatus for heating the axial termini of two metallic pipe lengths in a circumferential or part-circumferential band prior to completion of a multi-stage welding operation to weld said lengths axially together, which apparatus comprises a conductor and a carrier for carrying said conductor in such disposition that in use the conductor is arranged in inductive proximity with respect to the pipe surface, the apparatus including means for dissipating heat from the conductor in use.

25.      An apparatus as claimed in Claim 24 wherein the

conductor is a metallic member secured in heat-dissipating
relationship to means defining a fluid coolant flow path.

26.        An apparatus as claimed in Claim 25 wherein
the conductor is a metallic member secured in heat conductive
contact to a metallic pipe for carrying a coolant flow in use.

27.        An apparatus as claimed in Claim 24 wherein the
conductor comprises a metallic pipe whose bore in use carries
a fluid coolant medium in flow.

28.        An apparatus as claimed in any one of Claims
24 to 27 wherein the carrier for the conductor is as
defined in any one of Claims 10 to 12.

29.        An apparatus as claimed in any one of Claims
24 to 28 which comprises one or more metallic ribbon-like
conductor members.

30.     ·    An apparatus as claimed in Claim 29 wherein
the member(s) are as defined in any one of Claims 2 to 5
or 9.

31.        An apparatus as claimed in Claim 24 and
substantially as hereinbefore specifically described, and
as illustrated in, any one of Figures 1 to 3.

32.        Use of apparatus as claimed in Claim 24 for
heat treatment of a metallic pipe.

33.        A pipe end heater comprising an induction heat element in the form of one or more electrically
conductive members so sized and configured as to be
receivable in juxtaposed spaced relationship with the
pipe surface at an open end thereof.

34.       A pipe end heater as claimed in Claim 33
wherein the element has means engageable with the pipe to
enable retention of the element with the conductive
member(s) disposed in said juxtaposed relationship with
the pipe end.

35.       A pipe end heater comprising at least one
metallic conductor formed into a part-circular member
receivable over or within an end of a pipe of predetermined
diameter so as to be spaced from its external or internal
circumferential surface in juxtaposed relationship therewith over substantially all of said surface.

36.       A pipe end heater comprising means defining a hollow pipe-
receiving cylindrical member, at least one conductor element
mounted to the interior cylindrical surface of the member
so as to be juxtaposed in spaced relationship with the
pipe surface when a pipe is received in said member and
means engageable with the surface of a pipe so received to
maintain said spaced relationship.

37.       A pipe end heater as claimed in claim  36
wherein a plurality of members axially extending with
respect to the pipe are spaced apart on the circumference
of a cylindrical pipe-receiving cavity and carry said
conductors mounted thereto within said cavity.

0038655

38.         A pipe end heater substantially as hereinbefore described with reference to Figures 6 to 8 or Figure 9 of the accompanying drawings.

~~Claim(s) Nr 38 deemed to be abandoned~~

39.         A method of pipe end heating which comprises disposing a heater as claimed in any one of claims 33 to 38 with a conductor member thereof in juxtaposed spaced relationship with the pipe surface at an end thereof and conducting electrical current through the conductor member(s) of said heater to raise the temperature of the pipe surface.

~~Claim(s) Nr 39 deemed to be abandoned~~

FIG.1.

FIG.8.

2/7

FIG.2.

FIG.3.

FIG.4.

0038655

4/7

Plane of end
Plate 13

FIG.5.

48a    49a    48a

300
250
200
T°C.
150
100
50

A

Distance from centre line
of weld.

Distance from centre line
of weld.

———— Temperature after heating with Induction Heater of Figs.1 & 2.

---- Temperature after switching off heater for 30 seconds.

xxxx Temperature after heating with prior art Heater.

FIG.11.

0038655

FIG.9.

FIG.10.

7/7

FIG.12.